# EUROPÄISCHE PATENTANMELDUNG

(11) **EP 1 286 512 A1**
(43) Veröffentlichungstag der Anmeldung: **26.02.2003**
(21) Anmeldenummer: 01120099.5
(22) Anmeldetag: 21.08.2001
(51) Int. Cl.: H04L 29/06, H04L 12/24, G06F 3/033

(54) **Verfahren und Endgerät zum Empfangen von Daten von wenigstens einem Server**

(71) Anmelder: C. Com AG, 57250 Netphen (DE)
(72) Erfinder: Sondermann, Rudolf, 57250 Netphen (DE); Bitzer, Kai, 57462 Olpe (DE); Bluhm, Helmut, 57271 Hilchenbach (DE)
(74) Vertreter: Grünecker, Kinkeldey, Stockmair & Schwanhäusser Anwaltssozietät

(57) **Zusammenfassung**

Zur Ermöglichung eines automatischen Tarifwechsels ohne die Notwendigkeit eines erneuten Downloads eines Dialers beispielsweise beim Videostreaming stellt die Erfindung ein Verfahren zum Betreiben eines Endgeräts zum Empfangen von Daten von wenigstens einem Datenserver über Datenverbindungen bereit, wobei den Daten für ihre Übertragung Tarife zugeordnet sind und die Datenverbindungen zur Übertragung von Daten jeweils eines bestimmten Tarifs vorgesehen sind, und wobei das Verfahren die folgenden Schritte umfasst: Empfangen von ersten Daten, denen ein erster Tarif zugeordnet ist, über eine erste Datenverbindung, Eingeben einer Benutzeranfrage für zweite Daten, denen ein zweiter Tarif zugeordnet ist, der vom ersten Tarif verschieden ist, und Empfangen der zweiten Daten über eine zweite Datenverbindung, die zur Übertragung von Daten des zweiten Tarifs vorgesehen ist, wobei die Benutzeranfrage vom Benutzer in eine auf dem Endgerät laufende Software eingegeben wird und die Software die zweite Datenverbindung in Abhängigkeit von der Benutzereingabe aufbaut. Die Erfindung stellt ebenfalls ein zugehöriges Endgerät bereit. Gemäß einer bevorzugten Ausgestaletung ist die Software ein Dialer mit integriertem Browser und Videoabspielprogramm.

## Beschreibung

Die Erfindung betrifft ein Verfahren zum Betreiben eines Endgeräts und ein zugehöriges Endgerät zum Empfangen von kostenpflichtigen Daten über eine Datenverbindung.

Über das Internet sowie andere Daten- oder Telekommunikationsnetze werden immer mehr kostenpflichtige Dienstleistungen wie etwa die Echtzeitübertragung von Videos angeboten. Ein Modell, die Dienstleistungen abzurechnen, ist die Verwendung entsprechend ausgelegter Telefongebühren, wenn zur Bereitstellung der Dienstleistung ein Telekommunikationsnetz verwendet wird. Die Verbindungszeit zwischen einem Anbieter der Dienstleistung und einem Empfänger bestimmt dabei, beispielsweise bei der Übertragung von Video- und Audiodaten, den Leistungsumfang und somit auch die Kosten für die Dienstleistung. Daher kann eine sinnvolle Abrechnung gegenüber dem Empfänger über dessen Telefongebühren in dem verwendeten Telekommunikationsnetz erfolgen.

Üblicherweise sind in dem Telekommunikationsnetz eine Vielzahl von Einwahlpunkten oder -knoten vorhanden, denen unterschiedliche Verbindungsentgelte zugeordnet sind. Dadurch kann der Anbieter unterschiedlich teure Dienstleistungen über die Einwahlpunkte mit unterschiedlichen Verbindungsentgelten anbieten.

Sollen beispielsweise Videos über das Internet zur Echtzeitabspielung ausgewählt werden, wird bei den bekannten Verfahren zunächst vom Benutzer über die Homepage des Anbieters der entsprechende Produktbereich ausgewählt. Mit der Auswahl wird ein Dialer heruntergeladen und aktiviert, der eine Verbindung zu einem Videoanbieter anwählt. Diese Verbindung läuft nicht über das Internet sondern über eine telefonische Direktverbindung. Ein Dialer ist hierbei eine Einwahlsoftware, die neben der eigentlichen Funktion, nämlich dem Anwählen einer Verbindung, noch zusätzliche Steuerungsaufgaben erfüllen kann wie etwa das Starten externer Programme.

Bei Aktivierung des Dialers wird die Verbindung zu der Homepage beendet. In einem Browserfenster werden nun Videotitel einer Sparte zur Auswahl gestellt und der Benutzer nimmt eine Auswahl vor. Der Dialer gibt ihm den Preis für die Nutzung, d.h. das geforderte Entgelt pro Zeiteinheit, und der Kunde bestätigt diesen sowie eventuell andere Nutzungsbedingungen.

Nach Bestätigung durch den Benutzer öffnet der Dialer einen externen, d.h. unabhängig vom Dialer auf dem Computer installierten Browser wie etwa den Internet Explorer® oder Netscape Navigator®, der die in der ausgewählten Sparte verfügbaren Titel anzeigt. Gleichzeitig beginnt die zu bezahlende Zeit. Der Benutzer wählt nun einen der angezeigten Titel aus, woraufhin sich das Browserfenster schließt und eine Darstellungssoftware wie etwa das Programm Windows Media Player® gestartet wird. Diese Darstellungssoftware ist wiederum separat auf dem Computer vorinstalliert.

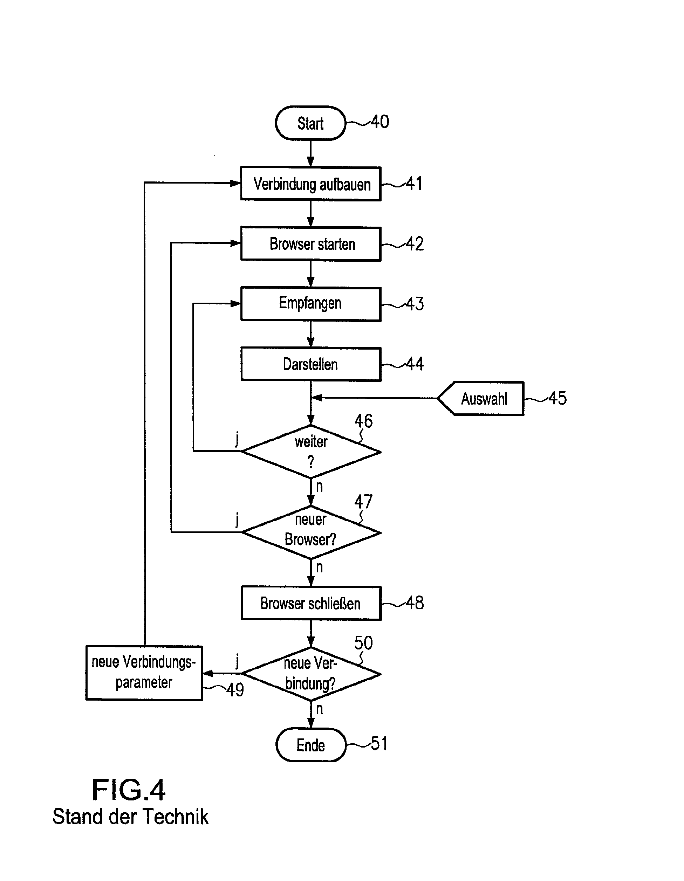

Der beschriebene Vorgang wird nunmehr genauer mit Bezug auf Figur 4 erläutert, in der zwischen Start 40 und Ende 51 die üblichen Schritte in dem Endgerät eines Benutzers zum Empfangen von Daten im Rahmen einer Dienstleistung gezeigt sind. In Schritt 41 wird zunächst eine Verbindung zwischen dem Endgerät und einem Datenserver des Anbieters der Dienstleistung über einen Einwahlpunkt eines Kommunikationsnetzes aufgebaut. In Schritt 42 wird dann ein Browser gestartet, der zur Verarbeitung und Steuerung der Darstellung empfangener Daten dient. In Schritt 43 empfängt das Endgerät im Rahmen der Dienstleistung Daten von dem Datenserver, die in einem Schritt 44 durch den Browser bzw. die Darstellungssoftware dargestellt werden.

Üblicherweise sind die empfangenen und im Browser dargestellten Daten zunächst Auswahldaten, die einem Benutzer des Endgeräts eine Auswahl 45 von Dienstleistungen ermöglichen. Solche Auswahldaten werden in der Regel bereits über einen kostenpflichtigen Einwahlpunkt bereitgestellt.

Abhängig von der Auswahl 45 des Benutzers, kann in einer Verzweigung 46 mit dem Schritt 43 des Empfangens fortgefahren werden. So können Dienstleistungen einer Preiskategorie über die Verwendung des ersten Einwahlpunktes mit dem entsprechenden Verbindungsentgelt beliebig lange angeboten werden.

Wenn gemäß der Auswahl 45 neben dem auf einer Darstellungseinheit des Endgerätes sichtbaren Fenster des Browsers ein zweites Browserfenster gestartet werden soll, bzw. wenn eine andere Instanz der Darstellungssoftware benötigt wird, um eine andere Dienstleistung derselben Preiskategorie in Anspruch zu nehmen, kann über eine Verzweigung 47 mit dem Schritt 42 fortgefahren werden. Für das neue Fenster kann der Verbindungsaufbau des Schrittes 41 entfallen, wenn Informationen beider Fenster über die gleiche Verbindung erhalten werden können.

Die herkömmlichen Verfahren unterstützen keinen automatisch durchgeführten Tarifwechsel, so dass sich der Benutzer in der Regel gezwungen sieht, denselben Tarif auch für andere Videos zu akzeptieren. Möchte der Benutzer aber dennoch eine Dienstleistung einer anderen Preiskategorie in Anspruch nehmen, beispielsweise das Abspielen höherpreisiger oder kostengünstigerer Videos einer anderen Sparte, so muss er einen neuen Dialer herunterladen und eine neue Verbindung aufgebauen. Dazu ist es zunächst notwendig, nach der Verzweigung 47 in einem Schritt 48 den Browser und die Darstellungssoftware sowie den bisher aktiven Dialer zu schließen. Weiterhin werden nach einer Verzweigung 50, in der geprüft wird, ob eine neue Verbindung aufgebaut werden soll, neue Verbindungsparameter im Schritt 49 festgelegt. Die neuen Verbindungsparameter führen nach dem Herunterladen und Starten des neuen Dialers und nach erneutem Verbindungsaufbau über einen anderen Einwahlpunkt in dem Schritt 41 zum Starten eines neuen Fensters im Schritt 42.

Die vorgenannten bekannten Verfahren weisen insbesondere infolge der Notwendigkeit, einen neuen Dialer herunterzuladen, falls ein Tarifwechsel erforderlich wird, erhebliche Nachteile auf.

Zunächst ist jeder Verbindungsaufbau für den Empfänger oder Benutzer mit dem Schließen des bisher betrachteten Fensters und dem Öffnen eines neuen Fensters verbunden. Auch wenn das Schließen und Öffnen durch den Dialer erfolgt, ist diese Vorgehensweise für den Benutzer lästig und verwirrend, da der Benutzer mit einem heterogenen Erscheinungsbild einer Vielzahl verschiedener Softwareprogramme konfrontiert wird und er sich hiermit auseinandersetzen muss. Zudem gehen, spätestens wenn der erste Browser geschlossen wird, die zugehörigen Kommunikationsparameter, beispielsweise eine temporäre IP-Adresse im Internet, verloren und müssen neu angefordert und eingerichtet werden.

Ein weiterer Nachteil des bekannten Verfahrens ergibt sich aus dem Umstand, dass viele Benutzer nach dem Download eines Dialers nicht mehr zu der Homepage des Anbieters zurückkehren werden. Seitens des Anbieters können hierdurch Kundenkontakte verloren gehen. Aber auch, wenn der Benutzer zu der Homepage des Anbieters zurückkehren möchte, ergibt sich der Nachteil, dass der Benutzer den Aufwand auf sich nehmen muss, die Adresse des ersten Anbieters erneut einzugeben.

Weiterhin ist nachteilig, dass bereits mit der Bestätigung in dem Dialerfeld die zu zahlende Zeit läuft, weswegen der Benutzer unter Zeitdruck auswählt. Hierdurch können Bedienfehler bei der Auswahl entstehen, die seitens des Benutzers zu Unzufriedenheit mit dem Anbieter führen können. Auch wird der Codec zum Dekodieren der Daten erst nach der Auswahl des jeweiligen Titels geladen, wobei der Benutzer für die hierfür anfallende Zeit bereits Gebühren bezahlen muss, obwohl zu dieser Zeit noch keine Videobilder gezeigt werden.

Die Notwendigkeit des Downloads eines neuen Dialers bei Tarifwechsel führt ferner zu einer starren Tarifstruktur, da nach der Bestätigung im Dialerfenster keine variablen Kosten mehr festgelegt werden können.

Der Erfindung liegt daher daher die Aufgabe zugrunde, ein Verfahren und ein zugehöriges Endgerät bereitzustellen, die einen einfachen Tarifwechsel ermöglichen, ohne eine neue Einwahlsoftware (Dialer) herunterladen zu müssen.

Diese Aufgabe wird durch die Gegenstände der unabhängigen Patentansprüche gelöst. Die Unteransprüche beschreiben bevorzugte Ausführungsformen der Erfindung.

Erfindungsgemäß wird auf dem Endgerät eine Software betrieben, die anhand einer Benutzeranfrage für Daten automatisch einen entsprechenden Verbindungsaufbau durchführt. Hierdurch entfällt das sonst notwendige Öffnen und Schließen von Browserfenstern, selbst wenn vor dem automatischen Verbindungsaufbau der Benutzer noch zur Bestätigung aufgefordert wird, dass ein Tarifwechsel benutzerseitig tatsächlich gewünscht ist.

Gemäß der Erfindung sind den Daten für ihre Übertragung Tarife zugeordnet. Beispielsweise ist die Erfindung besonders vorteilhaft in Echtzeit-Videostreaming-Systemen, in denen Videodaten entsprechend der Videoqualität, Auflösung, Bildgröße etc., aber auch je nach den einzelnen Inhalten der Videos unterschiedlich tarifiert werden. Die Zuordnung der Tarife zu den Daten kann dadurch geschehen, dass die Daten in Kategorien eingeteilt sind, wobei jeder Kategorie ein Tarif zugeordnet ist.

Es wird ein Verfahren zum integrierten Verbindungsaufbau in einem Endgerät bereitgestellt, das über einen Einwahlpunkt eines Kommunikationsnetzes mit wenigstens einem Datenserver zur Bereitstellung einer Dienstleistung verbindbar ist, wobei das Verfahren die folgenden Schritte enthält: Öffnen eines Softwareprogramms (im folgenden als "Dialer" bezeichnet), Aufbauen einer ersten Verbindung zu dem Datenserver über einen ersten Einwahlpunkt des Kommunikationsnetzes, Öffnen eines in den Dialer integrierten Browsers, Empfangen von Auswahldaten über die erste Verbindung, Darstellen der empfangenen Auswahldaten und Verarbeiten einer Benutzerauswahl in dem Dialer, Abbauen der ersten Verbindung, Steuern eines zweiten Verbindungsaufbaues zu dem Datenserver über einen zweiten Einwahlpunkt des Kommunikationsnetzes durch den Dialer, Empfangen von weiteren Daten über den zweiten Einwahlpunkt und Darstellen der weiteren Daten durch den Browser beziehungsweise durch eine weitere in den Dialer integrierte Software.

Ein entsprechendes Endgerät umfasst eine Sende- und Empfangseinheit, die mit dem Kommunikationsnetz verbindbar ist, eine Darstellungseinheit zum Darstellen von Daten, eine Benutzerschnittstelle zum Empfang einer Benutzereingabe und eine Steuereinheit, die mit der Darstellungseinheit und der Sende- und Empfangseinheit verbunden ist und auf der die als Dialer bezeichnete Software läuft, wobei der Dialer eine Verbindungssteuerung zum Aufbau von Verbindungen über die Sende- und Empfangseinheit und einen Browser sowie eine Darstellungssoftware zur Steuerung der Darstellung der empfangenen Daten in der Darstellungseinheit umfasst. Der Dialer ist eingerichtet zum Betreiben der Verbindungssteuerung, des Browser und der Darstellungssoftware in einer Weise, dass empfangene Daten sowohl vor als auch nach einem Verbindungswechsel in demselben Fenster auf der Darstellungseinheit dargestellt werden können.

Durch das Verfahren und das entsprechende Endgerät kann dem Benutzer des Endgerätes auch bei einem Verbindungswechsel eine einheitliche Oberfläche angeboten werden. Durch die Möglichkeit, den Verbindungswechsel für den Benutzer komfortabel zu gestalten, wird dem Anbieter der Dienstleistung eine hohe Flexibilität ermöglicht.

Vorzugsweise wird durch Aufbau einer kanalgebündelten Verbindung die Übertragungsgeschwindigkeit optimiert, da über solche Zweikanalverbindungen Daten mit einer höheren Datenrate übertragen werden können.

Weitere Vorteile entstehen durch die Integration eines Internetbrowsers und einer Darstellungssoftware in den Dialer, weil hierdurch häufige Fensterwechsel vermieden werden und auch die Betriebssicherheit in vorteilhafter Weise verbessert wird. Unter Integration ist hierbei zu verstehen, dass die Komponenten zwar selbständig auf dem jeweiligen Computersystem vorinstalliert sind, aber vom Dialer als eigene Instanzen geöffnet werden, so dass der Dialer die Programme vollständig steuern und auch Daten von diesen integrierten Programmen erhalten kann. Somit führt die Integration der genannten Komponenten in den Dialer zu einer verbesserten Parameterübergabe und Kommunikation zwischen den Komponenten sowie zu der Möglichkeit einer ausgefeilteren Taskbearbeitung auf dem Endgerät. Hierdurch ergeben sich bei der Entwicklung des Dialers Programmiertechniken, die beim Aufruf externer, also nicht integrierter Komponenten in dieser Weise nicht möglich sind.

Im folgenden werden bevorzugte Ausführungsformen der Erfindung anhand der beigefügten Zeichnungen beschrieben, die im einzelnen zeigen:
Fig. 1 ein System mit Datenservern und einem Endgerät gemäß eines bevorzugten Ausführungsbeispiels der vorliegenden Erfindung;
Fig. 2 die Einheiten in einem Endgerät gemäß der vorliegenden Erfindung;
Fig. 3 ein erfindungsgemäßes Verfahren zum Betreiben eines Endgerätes nach Fig. 2;
Fig. 4 ein Verfahren zum Betreiben eines Endgerätes nach dem Stand der Technik.

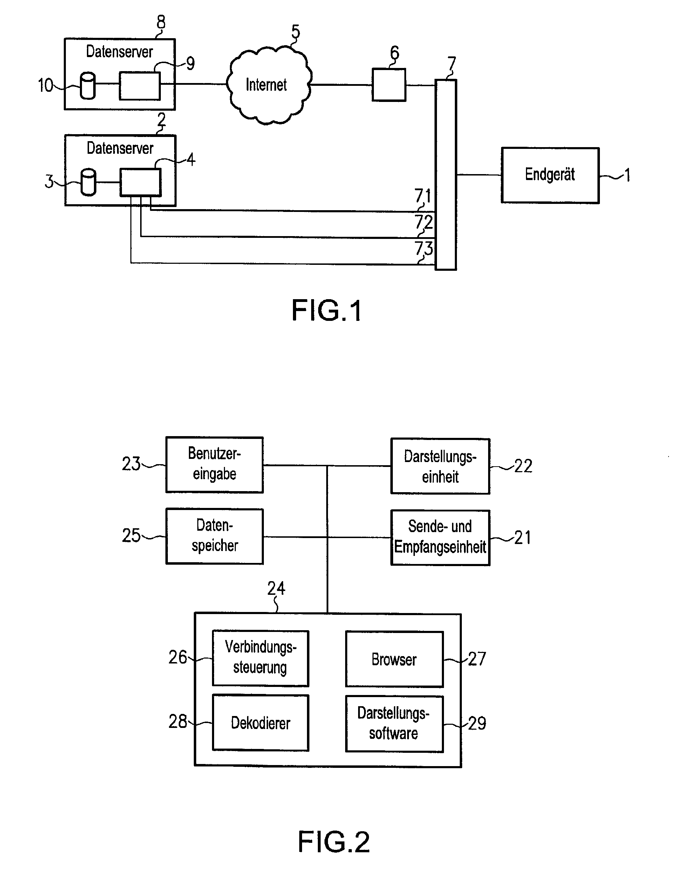

In dem bevorzugten Ausführungsbeispiel von Figur 1 enthält ein Kommunikationssystem ein Endgerät 1 und Datenserver 2 und 8, die jeweils neben einer Steuereinheit 4 bzw. 9 auch über einen Datenspeicher 3 bzw. 10 verfügen. Das Endgerät 1 ist über ein Kommunikationsnetz 7 und einen Internetserviceprovider 6 mittels des Internets 5 mit dem Datenserver 8 verbindbar. Der Datenserver 8 stellt die Homepage des Dienstleistungsanbieters bereit und ermöglicht auch den Softwaredownload des Dialers. Das Endgerät 1 ist weiterhin über das Kommunikationsnetz 7 und dessen Einwahlpunkte 71 bis 73 mit dem Datenserver 2 verbindbar. In Figur 1 sind exemplarisch drei Einwahlpunkte zur Verbindung des Endgeräts 1 mit dem Datenserver 2 gezeigt, es können jedoch auch beliebige andere Anzahlen von Einwahlpunkten zur Anwendung kommen. Beispielsweise ist der Datenserver 2 über 60 Einwahlpunkte erreichbar.

Der Datenserver 2 ist ein Computersystem, das unter Steuerung der Einheit 4 dienstleistungsbezogene Daten, die im Speicher 3 abgelegt sind, auf Anforderung an das Endgerät 1 übersendet. In dem bevorzugten Ausführungsbeispiel ist der Datenserver 2 ein Videoserver, der in seinem Datenspeicher 3 eine Vielzahl von Videos verschiedenen Inhalts und unterschiedlicher Qualität bereit hält. Die Videos können an den Benutzer des Endgeräts 1 über die Verbindungen 71 bis 73 in Echtzeit im sogenannten Videostreaming-Verfahren übersandt werden.

Obgleich in der folgenden Beschreibung von dem erwähnten Ausführungsbeispiel des Videostreaming ausgegangen wird, ist anzumerken, dass die vom Datenserver 2 bereitgestellte Dienstleistung auch die Übertragung anderer Daten beinhalten kann. Weiterhin kann die Dienstleistung auf anderem Wege erbracht werden, so dass sie durch die vom Datenserver 2 bereitgestellten Daten lediglich bestätigt wird. Beispielsweise könnten die zu dem Endgerät 1 übertragenen Daten eine Auftragsbestätigung für eine durch den Benutzer in Auftrag gegebene Blumenoder Pizzabestellung sein.

Mit dem Endgerät 1 richtet der Benutzer zunächst eine Internetverbindung zum Datenserver 8 ein. Von diesem Datenserver lädt sich der Benutzer einen Dialer 24 herunter, der nachfolgend näher beschrieben werden wird. Der Dialer ist eine Einwahl- und Auswahlsoftware zum Einwählen in den Server und Auswählen der Daten, wobei diese Software die weitere Steuerung auf Seiten des Endgeräts 1 übernimmt.

Der Dialer wählt zunächst eine vorbestimmte Rufnummer eines DFÜ-Netzwerkservers 2 an. Bei erfolgreicher Anmeldung am Netzwerk zeigt er eine festgelegte HTML-Seite als Startseite an. Hier kann der Benutzer des Endgeräts 1 in einer Ordnerstruktur mit HTML-Links eine Videosparte auswählen, wobei der Dialer geöffnet bleibt und die Funktion eines Browsers übernimmt. Die zur Auswahl stehenden Videosparten unterscheiden sich beispielsweise in den Videoinhalten oder in der Qualität der Daten. Jeder Sparte ist gewöhnlich eine andere Preiskategorie zugeordnet. Zum Zweck der Spartenauswahl hat der Dialer einen Internetbrowser der oben bereits beschriebenen Art integriert. Mit Hilfe des Browsers wird es dem Benutzer des Endgeräts 1 auch ermöglicht, einen Titel innerhalb der Sparte auszuwählen.

Hat der Benutzer die entsprechende Auswahl vollzogen, so bricht der Dialer die Navigation im Browser ab, ermittelt den zugehörigen Tarif, beendet die momentane Verbindung und wählt sich beim Datenserver 2 über diejenige der Verbindungen 71 bis 73 ein, die zur Übertragung von Daten dieses Tarifs vorgesehen ist. Dann übergibt der Dialer die URL je nach Art der Auswahl zunächst an den Browser, oder er übergibt sie gleich an eine im Dialer integrierte Videoabspielsoftware, die das Video vom Server streamt und auf dem Endgerät 1 darstellt.

Der Benutzer des Endgeräts 1 kann diese Abspielung jederzeit unterbrechen und ein anderes Video wählen. Die hierzu erforderlichen Steuerungen führt der Benutzer mittels des Dialers durch. Wählt der Benutzer eine neue Videosparte aus, also einen anderen Tarif, beziehungsweise wählt er in einer solchen Sparte einen Videotitel aus, so unterbricht der Dialer die erste Datenverbindung und baut gemäß der geänderten Tarifinformation eine zweite Datenverbindung zum Datenserver 2 auf.

Die vom Datenserver 2 heruntergeladenen Daten sind je nach zugehörigem Tarif kostenpflichtig und werden dem Benutzer des Endgeräts 1 zeitabhängig in Rechnung gestellt. In einer bevorzugten Ausgestaltung werden dem Benutzer vom Dialer daher Kosteninformationen angezeigt, die es dem Benutzer gestatten, die anfallenden Kosten zu kontrollieren. Vorzugsweise enthalten diese Kosteninformationen die angefallene Verbindungsdauer sowie den jeweils aktuellen Tarif, d. h. den Minutenpreis. In einem weiteren bevorzugten Ausführungsbeispiel erfolgt die Abrechnung nach einem einmal festgelegten Festpreis, der beim Verbindungsaufbau fällig wird und die gesamte Datenübertragung eines Videos umfasst. Dieser Festpreis kann neben den Videokosten auch die Bereitstellungsgebühren des Kommunikationsnetzes 7 umfassen, also die Telefonkosten, in einer weiteren bevorzugten Ausführung können diese Bereitstellungsgebühren jedoch auch separat abgerechnet werden.

In dem System von Figur 1 können eine Vielzahl von Endgeräten 1 und eine Vielzahl von weiteren Datenservern 2, 8 angeordnet sein. Beispielsweise können mehrere Datenserver 2 vorgesehen sein, zu denen das Endgerät 1 eine Verbindung aufbauen kann. Somit würde dem Benutzer des Endgeräts 1 ermöglicht werden, mit Hilfe ein und derselben Dialersoftware Daten verschiedener Datenserver anzufordern und darzustellen.

Die genauere Funktionsweise des Endgeräts 1 einschließlich des auf dem Endgerät 1 laufenden Dialers 24 wird nunmehr unter Bezugnahme auf Figur 2 ersichtlich. Die Figur beschreibt ein Endgerät mit seinen wesentlichen funktionalen Einheiten. Neben einer Sende- und Empfangseinheit 21 sowie einer Darstellungseinheit 22, die beispielsweise ein Bildschirm oder ein Lautsprecher sein kann, sind ein Datenspeicher 25 sowie eine Benutzereingabeeinheit 23 mit einer Steuereinheit verbunden, auf der der Dialer 24 läuft.

Die Benutzereingabeeinheit 23 kann beispielsweise eine Tastatur, eine Maus, ein Joystick oder ein Mikrophon beinhalten. Ferner kann die Benutzereingabeeinheit 23 mit der Darstellungseinheit 22 auch zu einem Touchscreen verbunden sein.

Als Endgeräte 1 kommen sowohl stationäre Geräte wie Computer als auch mobile Geräte wie Notebooks, Mobiltelefone, Webpads etc. in Betracht.

Der Dialer 24 umfasst verschiedene in die Software integrierte Komponenten. Zunächst enthält der Dialer 24 einen Browser 27 zur Darstellung und Verarbeitung von empfangenen HTML-Daten. Die vom Browser 27 des Dialers 24 angezeigten HTML-Seiten werden beispielsweise zur Durchführung eines Tarifwechsels benötigt.

Der Dialer 24 enthält weiterhin eine Verbindungssteuerung 26 zum Steuern der Sende -und Empfangseinheit 21, um eine Datenverbindung 71 bis 73 zum Datenserver 2 aufzubauen und abzubauen. Die Verbindungssteuerung 26 kann weiterhin einen Gebührenzähler enthalten, der beispielsweise Gebührentakte zählt.

Weiterhin umfasst der Dialer 24 einen Dekodierer 28 zum Dekodieren der empfangenen Daten und eine Darstellungssoftware 29 zur Darstellung der empfangenen Daten auf der Darstellungseinheit 22. Die Darstellungssoftware 29 ist ebenfalls in den Dialer 24 integriert und kann beispielsweise bei dem gegenwärtigen Ausführungsbeispiel des Videostreamings der Windows Media Player® sein.

Der im Dialer 24 integrierte Browser 27 basiert vorzugsweise auf dem Internet Explorer® oder einem vergleichbaren Internetbrowser. Ein geöffneter oder gestarteter Browser 27 wird im Fenster des Dialers auf der Darstellungseinheit 22 dargestellt. Damit bei einem Verbindungswechsel das Fenster nicht gewechselt werden muss, übernimmt der Dialer 24, wie erwähnt, auch die Steuerung des Verbindungsaufbaus. Hierzu nimmt der Dialer 24 in einem oder mehreren Browserfenstern 27 Daten vom Benutzer entgegen.

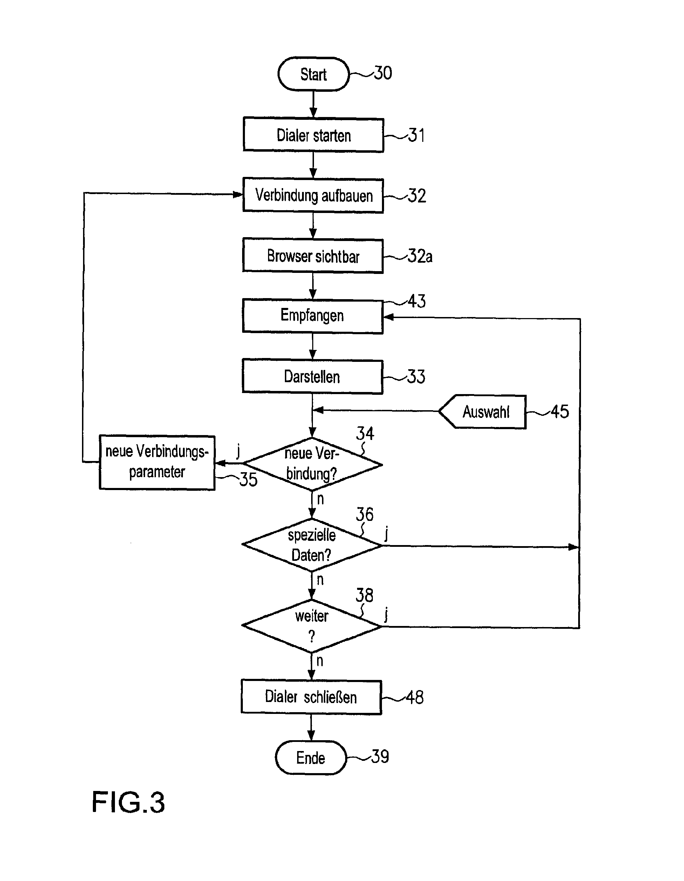

Das vorgenannte Vorgehen wird nunmehr unter Bezugnahme auf Figur 3 näher erläutert. Die Figur zeigt ein Flussdiagramm, das in den Schritten zwischen dem Start 30 und dem Ende 39 ein bevorzugtes Ausführungsbeispiel des erfindungsgemäßen Verfahrens zum Betreiben eines Endgeräts 1 zeigt. In Schritt 31 wird zunächst der Dialer 24 gestartet, der zuvor beispielsweise vom Datenserver 8 heruntergeladen worden ist. Der Dialer 24 kann aber auch zuvor auf dem Endgerät 1 über einen physikalischen Datenträger wie eine Diskette, CDROM oder DVD installiert worden sein. Nach dem Start des Dialers in Schritt 31 baut der Dialer 24 zunächst im Schritt 32 eine Verbindung zum Datenserver 2 auf. Dann wird im Dialerfenster ein Browser sichtbar (Schritt 32a), das mit Hilfe des im Dialer 24 integrierten Browsers 27 auf der Darstellungseinheit 22 des Endgeräts 1 gezeigt wird. Hat der Benutzer mit Hilfe des Browsers 27 eine Sparte und in der Sparte einen Titel ausgewählt, so werden vom Datenserver 2 an das Endgerät 1 die angeforderten Videodaten übermittelt. Die Daten werden im Endgerät 1 im Schritt 43 empfangen und mittels der Darstellungssoftware 29 im Schritt 33 auf der Darstellungseinheit 22 angezeigt. Während des Abspielens der Videodaten in Schritt 33 wird das Browserfenster in den Hintergrund verschoben und ist somit nicht mehr sichtbar.

Nachdem das Video abgespielt worden oder falls die Abspielung vom Benutzer beispielsweise durch Betätigung einer "Stop"-Taste unterbrochen worden ist, wird das Browserfenster mit der zuletzt angezeigten HTML-Seite wieder in den Vordergrund gebracht und ist somit für den Benutzer sichtbar. In einem alternativen Ausführungsbeispiel wird nicht dasselbe Browserfenster wieder angezeigt, sondern ein anderes Fenster, das das erste Browserfenster ersetzt. Der Benutzer hat nun im Schritt 45 die Möglichkeit einer weiteren Auswahl von Videodaten. Beispielsweise kann der Benutzer durch Betätigung einer besonderen Taste eine Umwahl auf den Startserver mit dem gleichen oder einem anderen Tarif als dem für den Video-Download anfallenden Tarif erwirken, um eine andere Kategorie von Videos auszuwählen. Dieser andere Tarif kann beispielsweise günstiger als der Tarif für die Videodaten sein.

Die vom Benutzer eingegebenen Auswahldaten können somit Videos derselben Sparte bzw. Preiskategorie betreffen, können aber auch auf ein Video einer anderen Kategorie zeigen. Ferner können die Auswahldaten Videos betreffen, die auf einem anderen Datenserver als dem bisher verwendeten gespeichert sind. Je nach der Art der Auswahldaten ermittelt der Dailer 24 daher in Schritt 34, ob eine neue Verbindung aufgebaut werden muss, ob diese neue Verbindung zum selben oder zu einem anderen Datenserver aufzubauen ist und ob hierzu eine andere Datenverbindung 71 bis 73 bzw. ein anderer Einwahlknoten zur Anwendung kommen muss.

Wird festgestellt, dass eine neue Verbindung aufgebaut werden muss, wird zunächst die bisher verwendete Datenverbindung abgebaut, und es werden die neuen Verbindungsparameter in Schritt 35 ermittelt und gesetzt. Mit Hilfe dieser neuen Verbindungsparameter baut die Verbindungssteuerung 26 des Dialers 24 in Schritt 32a eine neue Datenverbindung auf. Über diese neue Datenverbindung 71 bis 73 werden dann wiederum in Schritt 43 Videodaten empfangen und im Schritt 33 abgespielt.

Wie zuvor erwähnt, stellt der Dialer 24 in Schritt 34 fest, ob eine neue Verbindung aufgebaut werden muss. Ein Verbindungswechsel kann beispielsweise notwendig werden, wenn die vom Benutzer in Schritt 45 eingegebenen Auswahldaten ein Video betreffen, das einer anderen Preiskategorie angehört. Im Folgenden wird eine bevorzugte Ausgestaltung des vorliegenden Ausführungsbeispiels angegeben, die in besonders einfacher Weise die Übermittlung der entsprechenden Tarifinformationen ermöglicht.

Bei der Auswahl der Videos in Schritt 45 werden dem Benutzer des Endgeräts 1 Sparten und Titel in einem Browserfenster angezeigt. Der Benutzer wählt einen Videotitel durch Anklicken eines entsprechenden Links aus. Sobald ein Tarifwechsel nötig wird, zeigt der Link auf eine Datei mit dem Namen bzw. der Namensendung "tarif.html". Dieser Link wird vom Dialer 24 abgefangen und von einer nicht sichtbaren Instanz des Browsers 27 ausgewertet. Die Titelzeile dieser HTML-Seite gibt über Schlüsselwörter und nachfolgende Informationen die folgenden Daten an das Programm weiter: Tarifinformationen im Klartext, die Vorwahl eines neuen Einwahlknotens 71 bis 73, die Rufnummer des neuen Einwahlknotens und die URL der nach erfolgreicher Umwahl anzuzeigenden HTML-Seite.

Diese Informationen liest das Programm aus der Titelzeile aus, führt nach Abfrage einen Tarifwechsel via Neueinwahl über die angegebene Telefonnummer durch und zeigt schließlich die vorbestimmte HTML-Seite an.

Wie vorher erwähnt, werden dem Benutzer mit Hilfe der Darstellungseinheit 22 vorzugsweise die für die neue Datenverbindung geltenden Tarifinformationen im Klartext angezeigt. Ferner werden dem Benutzer des Endgeräts 1 durch den Dialer 24 während des Abspielens des jeweiligen Videos in Schritt 33 die abgelaufene Zeit angezeigt, so dass der Benutzer die angefallenen Verbindungsentgelte abschätzen kann. Die angezeigten Tarifinformationen werden vorzugsweise aus der erwähnten Datei "tarif.html" gewonnen.

Vorzugsweise wird mit dem Verbindungsaufbau in Schritt 32a nur begonnen, wenn der Benutzer durch eine Eingabe den Tarif bzw. den neuen Tarif bestätigt hat.

Hat der Benutzer im Schritt 45 Auswahldaten eingegeben, die nicht den Aufbau einer neuen Verbindung erfordern, so setzt das in Figur 3 gezeigte Verfahren mit Schritt 36 fort. In diesem Schritt wird ermittelt, ob der Benutzer Daten angefordert hat, die gesondert vom Datenserver abzufragen sind. Ist dies der Fall, so setzt der Prozess von Figur 3 mit Schritt 43 fort. Die Darstellung der speziellen, gesondert angeforderten Daten erfolgt dann im Schritt 33 mit Hilfe eines Fensters des Browsers 27.

Die Ermittlung, ob die vom Benutzer im Schritt 45 ausgewählten Daten Videodaten oder andere Daten betreffen, erfolgt vorzugsweise mit Hilfe der Datei-Endungen. Beispiele solcher Endungen sind *.wmv und *.avi, es können jedoch auch eine Vielzahl anderer Endungen verwendet werden wie etwa *.mpg und andere. Anhand dieser Endungen erkennt der Browser 27 des Dialers 24, ob die in Schritt 45 vom Benutzer eingegebenen Auswahldaten Videodaten betreffen, die beispielsweise vom im Dialer 24 integrierten Windows Media Player® 29 dargestellt werden können, oder ob die Daten von einer anderen Darstellungssoftware 29 oder vom Browser 27 darzustellen sind.

Sollen weder eine neue Verbindung aufgebaut noch spezielle Daten empfangen werden, so überprüft der Dialer 24 im Schritt 38, ob die Auswahldaten des Benutzers auf eine Beendigung des Abspielbetriebs gerichtet sind. Ist dies der Fall, so wird im Schritt 48 der Betrieb des Dialers 24 beendet. Dies schließt auch die Beendigung der Ausführung des in den Dialer 24 integrierten Browser 27 sowie der Darstellungssoftware 29 ein. Wird festgestellt, dass weder eine neue Verbindung aufzubauen ist noch spezielle Daten zu empfangen sind und der Benutzer auch nicht eine Beendigung des Betriebs wünscht, so setzt der Dialer 24 mit dem Empfangen 43 und Abspielen 33 des aktuellen Videos fort.

Es ist offensichtlich, dass die in dem Flussdiagramm von Figur 3 gezeigten Schritte für verschiedene Ausgestaltungen der Erfindung in verschiedenen Kombinationen und anderen Reihenfolgen vorgesehen sein können.

Durch das beschriebene Verfahren kann ein Anbieter seine Preise und sein Angebot flexibel gestalten, ohne dass die Vielzahl der entsprechenden Endgeräte 1 angepasst werden muss. Weiterhin wird der Verbindungswechsel für den Benutzer so komfortabel, dass der Anbieter in der Strukturierung seines Angebots und der Benutzer in der Verwendung des Angebots unabhängiger werden.

Vorzugsweise werden standardisierte Einwahlparameter verwendet, um den direkten Betrieb auf nahezu allen Endgeräte-Rechnern zu ermöglichen, wobei die Parameter im Einzelfall, falls notwendig, vom Benutzer abänderbar sind. In einer anderen bevorzugten Ausführungsform werden bei erstmaliger Einrichtung alle Parameter automatisch erkannt. Falls dies im Einzelfall nicht möglich sein sollte, ist dann für die Anpassung der Wählparameter ein eigenes Menü vorgesehen.

Eine bevorzugte Ausgestaltung der Erfindung ergibt sich durch Zweikanalbündelung. Um die Übertragungsgeschwindigkeit zu optimieren, können über den selben Einwahlpunkt, d. h. die selbe Rufnummer, zwei unabhängige Verbindungen parallel aufgebaut werden, die dann verifiziert und zusammengeschlossen werden, so dass nachfolgend die beiden Verbindungen als eine Verbindung verwendet werden kann. Eine solche Zweikanalbündelung ist beispielsweise mit Endgeräten möglich, die über einen ISDN-Anschluss mit dem Kommunikationsnetz verbunden sind. Vorzugsweise kann der Benutzer auswählen, ob er eine Einkanaloder eine Zweikanalverbindung wünscht.

Aus der vorhergehenden Beschreibung wird deutlich, dass durch die Bereitstellung eines Dialers 24 der vorgenannten Art die Möglichkeit eröffnet wird, flexibel und einfach Videos mit völlig variablem Tarifsystem beliebig vielen Endnutzern zu präsentieren. Der Dialer beinhaltet hierbei alle nötigen Funktionen zum Einwählen in den Server, Auswählen der Videos per HTML-Seite und Anzeigen derselben mittels integrierter Darstellungssoftware. Die Einwahl kann über einen beliebigen Tarif erfolgen, und die Videos, die je nach Verbindungsrate in verschiedenen Qualtitätsstufen übertragen werden können, sind in beliebig viele unterschiedliche Tarifgruppen einteilbar. Für jeden Tarif erfolgt eine automatische Neueinwahl über eine Dial-in-Verbindung zum Datenserver 2 über eine entsprechende Rufnummer. Der Benutzer benötigt hierbei keine Kenntnisse über Dial-in-Verbindungen oder über Details der Tarifierung noch über die Funktionsweise des Videostreamingsystems.

Ferner erlaubt die Erfindung auch ohne Neuinstallation der Dialer-Software eine Anpassung an moderne Video-Codecs und somit eine gezielte Ausnutzung der verfügbaren Bandbreite. Wie bereits erwähnt, ist eine Neuinstallation selbst bei einem Tarifwechsel oder bei der Aufnahme neuer Videos in das Angebot nicht erforderlich. Weiterhin lassen die HTML-Auswahlseiten auch nachträglich beliebig ändern, so dass hier weitere flexible Gestaltungsmöglichkeiten eröffnet sind.

## Patentansprüche

1. Verfahren zum Betreiben eines Endgeräts (1) zum Empfangen von Daten von wenigstens einem Datenserver (2) über Datenverbindungen, wobei den Daten für ihre Übertragung Tarife zugeordnet sind und die Datenverbindungen zur Übertragung von Daten jeweils eines bestimmten Tarifs vorgesehen sind, wobei das Verfahren die folgenden Schritte umfasst:
Empfangen von ersten Daten, denen ein erster Tarif zugeordnet ist, über eine erste Datenverbindung;
Eingeben einer Benutzeranfrage für zweite Daten, denen ein zweiter Tarif zugeordnet ist, der vom ersten Tarif verschieden ist; und
Empfangen der zweiten Daten über eine zweite Datenverbindung, die zur Übertragung von Daten des zweiten Tarifs vorgesehen ist;
wobei die Benutzeranfrage vom Benutzer in eine auf dem Endgerät laufende Software (24) eingegeben wird und die Software die zweite Datenverbindung in Abhängigkeit von der Benutzereingabe aufbaut.

2. Verfahren nach Anspruch 1, wobei die empfangenen Daten Videodaten sind, die über die Datenverbindungen in Echtzeit übertragen werden.

3. Verfahren nach Anspruch 1 oder 2, weiterhin den Schritt umfassend:
Ausgeben der empfangenen Daten an den Benutzer unter Steuerung der Software (24).

4. Verfahren nach einem der Ansprüche 1 bis 3, wobei das Endgerät und der wenigstens eine Datenserver über ein Kommunikationsnetz verbunden sind und der Schritt des Eingebens einer Benutzeranfrage die folgenden Unterschritte umfasst:
Anzeigen einer HTML-Seite in einem Browser; und
Auswählen eines Links in der angezeigten HTML-Seite durch den Benutzer.

5. Verfahren nach Anspruch 4, wobei der Schritt des Beurteilens den Unterschritt umfasst des Anforderns einer vorbestimmten HTML-Seite, wobei die Titelzeile der HTML-Seite Schlüsselwörter enthält zur Kennzeichnung des zweiten Tarifs.

6. Verfahren nach einem der Ansprüche 1 bis 5, wobei eine vorbestimmte Datenverbindung unterhalten wird, solange das Endgerät keine Daten empfängt, denen ein Tarif zugeordnet ist.

7. Verfahren nach einem der Ansprüche 1 bis 6, wobei die Tarifzuordnung zu den Daten ohne Änderung der Software (24) veränderbar ist.

8. Verfahren nach einem der Ansprüche 1 bis 7, wobei die Zuordnung von Tarifen zu Daten dadurch erfolgt, dass die Daten in Kategorien eingeteilt sind und jeder Kategorie ein Tarif zugeordnet ist.

9. Endgerät zum Empfangen von Daten von wenigstens einem Datenserver (2) über Datenverbindungen, wobei den Daten für ihre Übertragung Tarife zugeordnet sind und die Datenverbindungen zur Übertragung von Daten jeweils eines bestimmten Tarifs vorgesehen sind, umfassend:
Mittel zum Empfangen von Daten, denen ein Tarif zugeordnet ist, über eine entsprechende Datenverbindung;
Mittel zum Empfangen einer Benutzeranfrage für Daten, denen ein Tarif zugeordnet ist;
Mittel zum Beurteilen, ob nach einer Benutzeranfrage ein Tarifwechsel erforderlich ist; und
Mittel zum Auswählen einer Datenverbindung gemäß dem für die Übertragung der vom Benutzer angefragten Daten erforderlichen Tarif.

10. Endgerät nach Anspruch 9, eingerichtet zur Durchführung des Verfahrens nach einem der Ansprüche 1 bis 8.

11. Computerprogrammprodukt mit computerlesbaren Befehlen zur Durchführung des Verfahrens nach einem der Ansprüche 1 bis 8.

12. Computerprogrammprodukt nach Anspruch 11, umfassend einen in das Computerprogrammprodukt integrierten Browser zur Darstellung von HTML-Seiten.

13. Computerprogrammprodukt nach Anspruch 11 oder 12, umfassend eine in das Computerprogrammprodukt integrierte Videodarstellungssoftware zum Abspielen von Videodaten.
